# EUROPEAN PATENT SPECIFICATION

(11) **EP 2 446 159 B1**
(45) Date of publication and mention of the grant of the patent: **18.02.2015**
(21) Application number: 10726093.7
(22) Date of filing: 24.06.2010
(51) Int. Cl.: F16C 27/06, F16C 39/02, B61C 9/10, B61C 9/00, F16D 3/06, F16D 9/08

(54) **TRANSMISSION ASSEMBLY FOR A MOTOR VEHICLE, IN PARTICULAR FOR A RAILWAY VEHICLE**
GETRIEBEANORDNUNG FÜR EIN KRAFTFAHRZEUG, IM BESONDEREN FÜR EIN SCHIENENFAHRZEUG
ENSEMBLE TRANSMISSION POUR VÉHICULE MOTORISÉ, EN PARTICULIER UN VÉHICULE FERROVIAIRE

(30) Priority: 26.06.2009 FR 0954384
(43) Date of publication of application: 02.05.2012
(73) Proprietor: GKN Driveline S.A., 78955 Carriers-sous-Poissy (FR)
(72) Inventor: BAUDRY, Olivier, F-78740 Vaux Sur Seine (FR)
(74) Representative: Blot, Philippe Robert Emile
(86) International application number: PCT/EP2010/058970
(87) International publication number: WO 2010/149731

(56) References cited:
- EP-A2- 1 065 120
- DE-A1- 19 755 307
- FR-A1- 2 315 036
- FR-A1- 2 747 438
- US-A- 3 037 573
- US-A1- 2006 111 216

## Description

The present invention relates to a transmission assembly for a motor vehicle, in particular for a railway vehicle, of the type comprising a drive shaft which is rotatable about a drive axis, and a sliding connection module, the drive shaft comprising:
- a driving end portion;
- a connecting end portion which is drivingly connected to the connection module; and
- a breakable portion which fixedly joins the driving end portion and the connecting end portion, and is adapted to break beyond a predetermined torque between the driving end portion and the connecting end portion,
the connection module comprising a connection casing which receives the connecting end portion of the drive shaft so that it is coupled to the connection casing in rotation about the drive axis and slidable along the drive axis, the connection module comprising a guide sleeve comprising a guide ring which guides the driving end portion of the drive shaft in translation along the drive axis and in rotation about the drive axis.

Railway vehicles are known which comprise this type of transmission assembly to drivingly connect the motor and the running wheels carried by a bogie.

The drive shaft comprises a drive rod equipped with a tripod. The tripod is received in a complementary female part formed by the connection casing and comprising tracks in which the tripod is received so as to be slidable parallel to the drive axis and to be coupled to the connection casing in rotation about the drive axis. The breakable portion of the drive shaft consists of a calibrated groove provided in the drive rod.

The guide sleeve comprises two bronze rings which guide the driving end portion of the drive shaft in translation along the drive axis and in rotation about the drive axis.

When there is a mechanical failure in the kinematic power transfer chain, the drive rod, used as a safety fuse, breaks in the region of the calibrated groove. The driving end portion and the connection portion comprising the tripod become independent, due to the free rotation of the driving end portion on the two bronze rings.

However, although this safety system is efficient, it only allows a very low running speed of about 80 km/h for a few hours in commercial service.

Document FR-A-2 891 330 proposes to improve the transmission assembly by replacing the safety device formed by the breakable portion of the drive rod with a safety module arranged between the connection casing and a universal joint of the bogie.

The benefit of this device is that it allows the commercial speed of the railway vehicle (330 km/h) to be maintained for several days, following the rupture of the safety fuse.

The closest prior art document FR2747438 discloses a transmission assembly for a motor vehicle for a railway in accordance with the preamble of claim 1.

However, the device is relatively complex.

An object of the invention is to provide a transmission assembly which allows the railway vehicle to maintain its high commercial speed after rupture of the safety fuse, and which is simple.

The invention accordingly relates to a transmission assembly for a motor vehicle of the above-mentioned type, characterised in that the guide sleeve further comprises at least one rolling bearing adapted to guide the driving end portion of the drive shaft in translation along the drive axis and in rotation about the drive axis, and in that said guide ring is expandable between an initial retracted state of small internal diameter and a dilated state of larger internal diameter, the internal diameter of the or each rolling bearing being greater than the internal diameter of the guide ring in its retracted state and smaller than the internal diameter of the guide ring in its dilated state.

According to particular embodiments, the transmission assembly for a motor vehicle according to the invention comprises one or more of the following features, taken in isolation or in any one of the technically possible combinations:
- the rolling bearing comprises an outer ring and an inner ring arranged inside the outer ring, the inner ring and the outer ring defining a bearing race therebetween;
- the rolling bearing is resiliently mounted radially to the axis of the rolling bearing;
- the transmission assembly comprises a resilient support ring which surrounds the outer ring of the rolling bearing so as to provide a freedom of radial displacement of the outer ring in the guide sleeve ;
- the rolling bearing has an inner surface which is adapted to guide the driving end portion of the drive shaft, the inner surface being made of a material having a low coefficient of friction, such as bronze;
- the rolling bearing is provided with an inner ring having a low coefficient of friction which defines said inner surface and is arranged inside the inner ring defining the bearing race;
- the guide sleeve comprises an additional rolling bearing which guides the driving end portion of the drive shaft in translation along the drive axis and in rotation about the drive axis, the guide ring preferably being arranged between the two rolling bearings;
- the guide ring and the rolling bearings are spaced along the drive axis with respect to one another;
- when the guide ring is in its dilated state, the rolling bearings guide the drive shaft in rotation about and in translation along the drive axis;
- before the rupture of the drive shaft, the or each rolling bearing is not in contact with the drive shaft;
- the transmission assembly comprises resilient loading means adapted to deform the guide ring from its retracted state towards and to its dilated state;
- the guide ring is divided radially into a plurality of portions, the resilient loading means being arranged between the portions to urge them radially apart from one another;
- the guide ring is held in its retracted state by a compression ring surrounding the guide ring, the compression ring being plastically deformable above a threshold temperature and thus adapted to allow the guide ring to dilate to its dilated state;
- the guide ring defines an internal bearing surface, the internal bearing surface being made of a material having a low coefficient of friction, such as bronze;
- the transmission assembly comprises a limitation ring, in particular a rigid ring, defining a guide surface which guides the driving end portion of the drive shaft in translation along the drive axis and in rotation about the drive axis, the limitation ring having an internal diameter adapted to limit the radial stresses applied to the rolling bearing in the event of a rupture of the drive shaft ruptures;
- before the rupture of the drive shaft, the limitation ring is not in contact with the drive shaft ;
- the guide ring, the rolling bearing, the additional rolling bearing and the limitation ring are arranged successively along the drive axis in the following order in the direction of the connection portion : the rolling bearing , the guide ring, the additional rolling bearing and the limitation ring;
- the limitation ring comprises an internal bearing surface;
- the driving end portion abuts radially against the limitation ring when the drive shaft ruptures;
- the transmission assembly comprises:
   - a driving universal joint intended to be connected to a drive motor;
   - a driven universal joint adapted to be driven by the driving universal joint, intended to be drivingly connected to the running wheels of the motor vehicle; and
   - a driving sliding connection system between the driving universal joint and the driven universal joint, comprising the drive shaft and the sliding connection module.

The invention further relates to a motor vehicle, in particular a railway vehicle, comprising a drive motor and running wheels, and a transmission assembly which drivingly connects the drive motor and the running wheels, characterised in that the transmission assembly is as defined above.

The invention will be better understood on reading the following description, given solely as an example, and with reference to the accompanying drawings, in which:
- Fig. 1 is a fragmentary diagrammatic section of a railway vehicle according to the invention;
- Fig. 2 is a fragmentary diagrammatic longitudinal section of a transmission assembly of the railway vehicle of Fig. 1;
- Fig. 3 is an enlarged view of a detail of the transmission assembly of Fig. 2;
- Fig. 4 is a diagrammatic cross-section of a guide ring provided on the transmission assembly of Figs. 2 and 3; and
- Figs. 5 to 9 are enlarged views of Fig. 3 showing the behaviour of the transmission assembly before and after rupture of a drive shaft, for example in the event of engine failure.

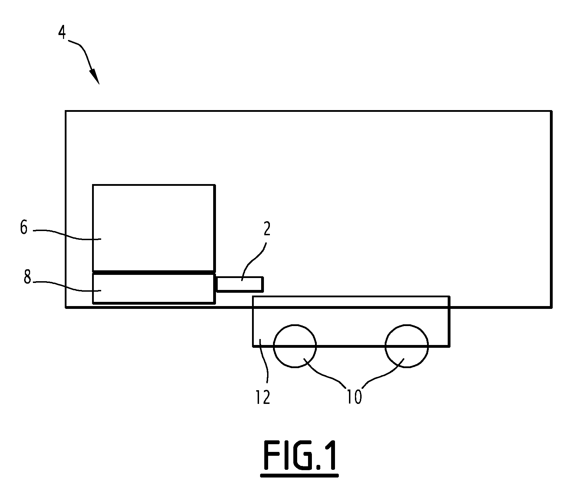

Fig. 1 is a diagrammatic view of a transmission assembly 2 of a railway vehicle 4, intended to drivingly connect a drive motor 6 mounted on a chassis 8 to running wheels 10 mounted on a bogie 12.

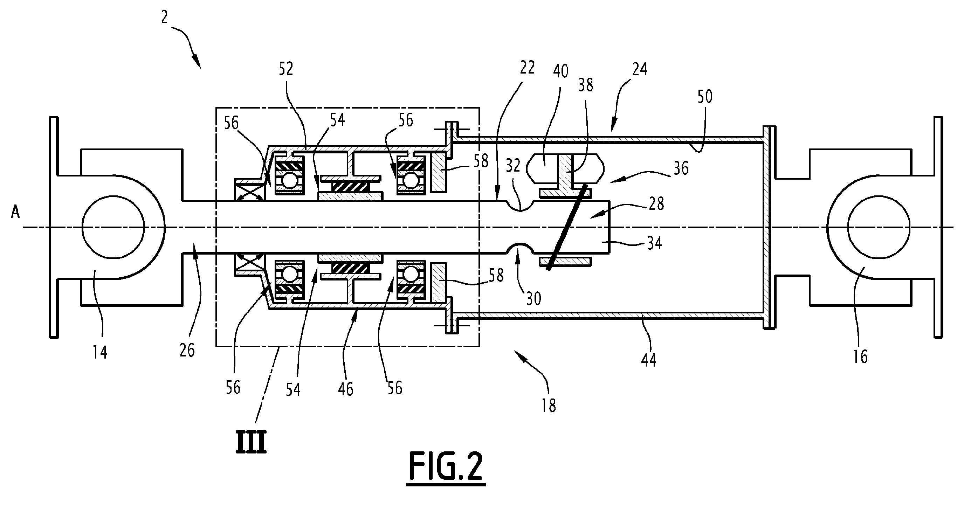

As shown in Fig. 2, the transmission assembly 2 comprises a driving universal joint 14 arranged on the engine chassis 8 and drivingly connected to the engine 6, a driven universal joint 16 drivingly connected to the wheels 10 and arranged on the bogie 12, and a driving sliding connection system 18 between the driving universal joint 14 and the driven universal joint 16.

The sliding connection system 18 comprises a drive shaft 22 which is rotatable about a drive axis A, and a sliding connection module 24.

In the following specification, the expressions "radially" and "axially" will be used relative to the axis of rotation A.

The drive shaft 22 comprises a driving end portion 26, a connecting end portion 28, and a breakable portion 30 which fixedly joins the driving end portion 26 and the connecting end portion 28, and is adapted to break beyond a predetermined torque between the driving end portion 26 and the connecting end portion 28.

The driving end portion 26 is fixedly joined to the driving universal joint 14, and the connection portion 28 is received in the connection module 24 so as to be slidable along the drive axis A and to be coupled to the connection module 24 in rotation about the drive axis A.

The breakable portion 30 consists of a calibrated groove 32 of the drive shaft 22.

The connecting end portion 28 of the drive shaft 22 comprises a drive rod 34 having the drive axis A as its axis, and a tripod 36 which is fixedly joined to the rod 34 and illustrated symbolically.

The driving end portion 26 and the breakable portion 30 of the shaft 22 are integral with the rod 34.

The rod 34 has, for example, splines which couple the tripod 36 in rotation about the drive axis A.

The tripod 36 comprises, for example, three branches 38 arranged at 120° about the drive axis A and each branch 38 having a rolling wheel 40. Only one of the branches 38 can be seen in the figures.

The sliding connection module 24 comprises on the one hand a connection casing 44 which receives the connecting end portion 28 of the drive shaft 22 in such a way that it is coupled to the connection casing 44 in rotation about the drive axis A and slidable along the drive axis A and, on the other hand, a guide sleeve 46 for guiding the end portion 26 in translation along the drive axis A and in rotation about the drive axis A.

The sleeve 46 and the casing 44 together define a housing for receiving the drive shaft 22.

The sleeve 46 is removably fixed on the connection casing 44, for example by means of screws.

The connection casing 44 is fixedly joined to the driven universal joint 16.

The connection casing 44 comprises a female portion 50 for receiving the tripod 36. The female portion 50 defines three pairs of running tracks (not illustrated) each of which receives a respective wheel 40 which is adapted to roll parallel to the drive axis A.

The guide sleeve 46 comprises a hollow body 52, which is fixed to the connection casing 44, and a guide ring 54 and two rolling bearings 56, which are accommodated in the body 52.

The guide sleeve 46 further comprises a rigid ring 58 for limiting the possible freedom of radial displacement of the drive shaft 22 after rupture and thus limiting the stresses applied to the ring 54 and to the bearings 56 on rupture.

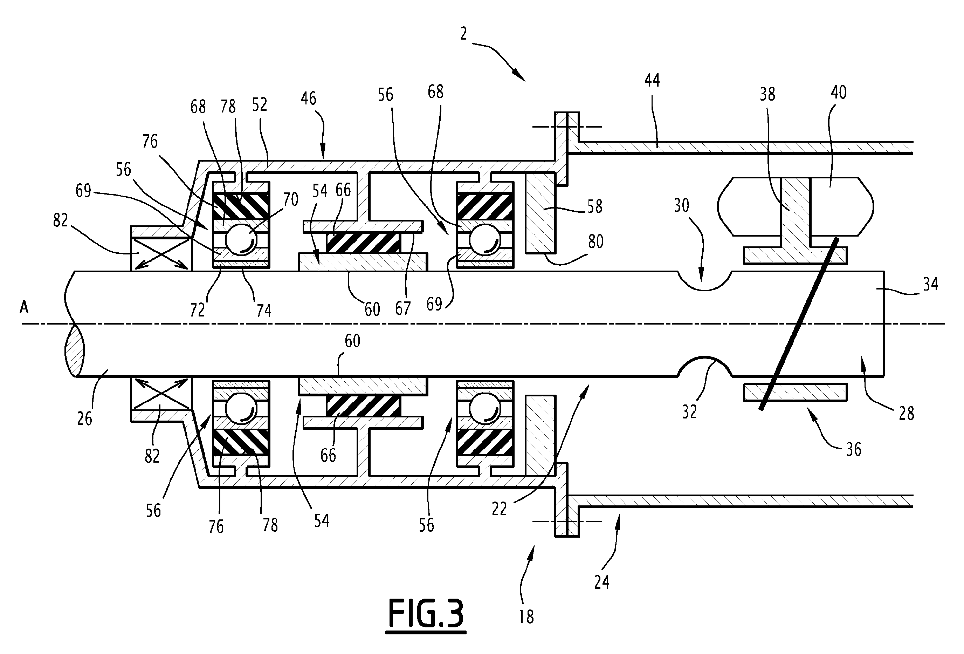

As illustrated in more detail in Fig. 3, the guide ring 54 defines an internal bearing surface 60 of axis A which guides the driving end portion 26 in rotation and in translation along the axis A before rupture of the shaft 22.

Indeed, before rupture and during normal operation of the transmission assembly 2, the internal bearing surface 60 of the ring 54 is in contact with the cylindrical rod formed by the driving end portion 26.

The guide ring 54 has the feature of being automatically expandable between a retracted state of small diameter and a dilated state of a larger internal diameter.

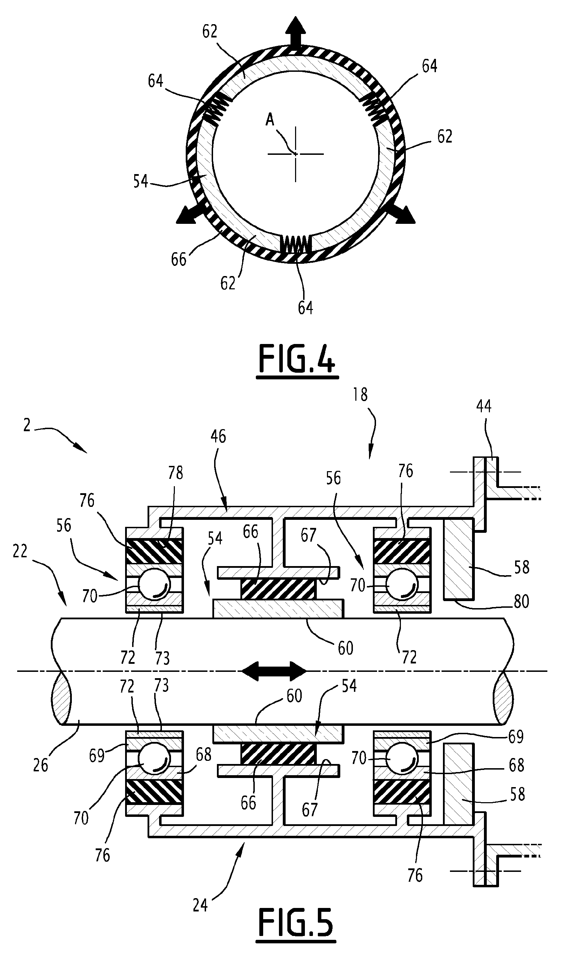

For this purpose, as illustrated in Fig. 4, the ring 54 is divided into a plurality of radial portions 62 and comprises resilient loading means 64 which are provided between the portions 62 to urge them radially apart from one another.

A compression ring 66 surrounds the ring 54 and holds the ring 54 in its retracted state until the possible rupture of the drive shaft 22. The compression ring 66 is received in an internal bearing surface 67 of axis A of the body 52.

Before rupture of the drive shaft 22, the driving end portion 26 of the shaft 22 is rotationally coupled to body 52 of the guide sleeve 46 and the friction between the shaft 22 and the ring 54 is very low.

Indeed, the bearing surface 60 of the guide ring 54 is made of a material having a low coefficient of friction, such as bronze.

After rupture, the portion 26 of the drive shaft 22 rotates at a very high speed relative to the body 52, and this generates great friction in the guide ring 54 and raises its temperature.

The compression ring 66 is made of a plastic material which is adapted to deform plastically under the action of the resilient loading means 64 above a threshold temperature. This threshold is about 130°C to 140°C, for example.

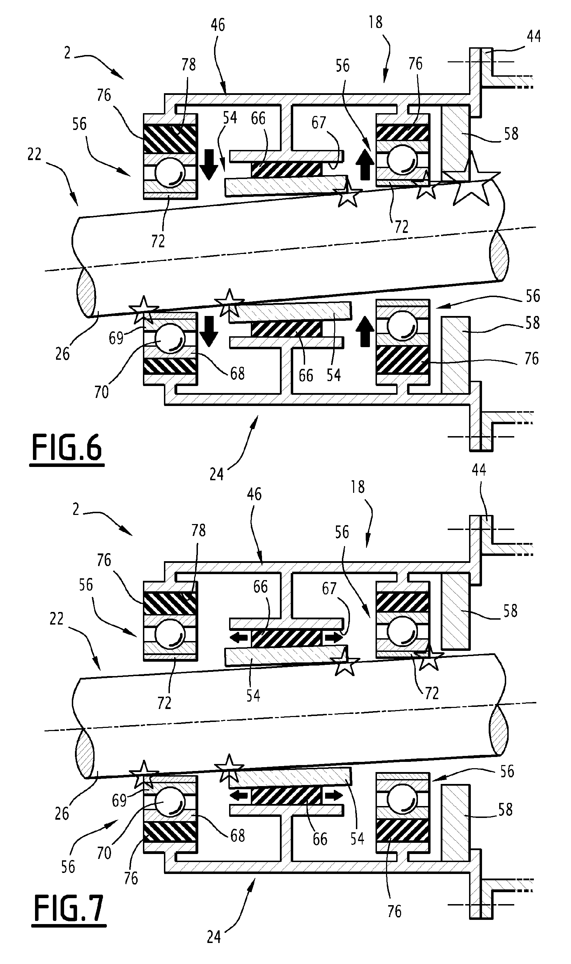

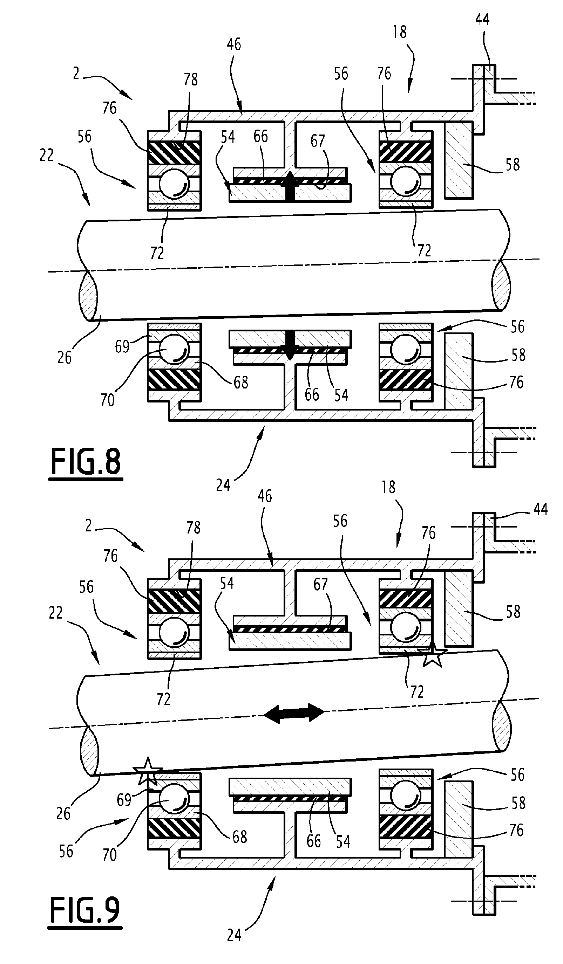

Thus, in the event of rupture, the compression ring 66 becomes malleable and allows the guide ring 54 to dilate to its dilated state of large diameter, as will be explained with reference to Figs. 7 and 8.

The rolling bearings 56 are arranged on either side of the guide ring 54. The guide ring 54 and the rolling bearings 56 are spaced along the drive axis with respect to one another.

The bearings 56 are identical and each has an outer ring 68 defining an outer bearing race and an inner ring 69 defining an inner bearing race with rolling elements 70 placed in-between, specifically balls in the example shown.

The internal diameter of the rolling bearings 56 is greater than the internal diameter of the guide ring 54 in its retracted state and smaller than the internal diameter of the guide ring 54 in its dilated state.

Each rolling bearing 56 comprises an inner ring 72 having a low coefficient of friction arranged inside the inner ring 69. The ring 72 defines a cylindrical bearing surface 74 of axis A. The rings 72 are made of bronze, for example.

As can be seen on Figs. 3 and 5, in normal operation, in other words when the breakable portion 30 is intact, the rolling bearings 56, and in particular the bearing surface 73, are not in contact with the drive shaft 22.

Each rolling bearing 56 has the further feature of being resiliently mounted relative to the body 52 radially to the axis A.

Indeed, the bearing 56 is carried by a resilient support ring 76, of axis A, which is itself arranged against an inner bearing surface 78 of the body 52.

The support rings 76 allow for a resilient freedom of radial displacement of the rolling bearings 56.

The rigid ring 58 for its part is arranged in the body 52 on the side of the connection portion 28 of the drive shaft 22, relative to the bearings 56 and the ring 54. The rigid ring 58 defines an internal bearing surface 80, of axis A.

As can be seen on Fig. 3, the rolling bearings 56, the guide ring 54 and the rigid ring 58 are arranged successively along the drive axis, in the following order in the direction of the connecting end portion 28 (from the left to the right on figure 3): a first rolling bearing 56, the guide ring 54, a second rolling bearing 56 and the rigid ring 58.

The rigid ring 58 is configured to limit the freedom of displacement of the driving end portion 26 in the event of a rupture of the shaft 22 and thus the freedom of radial displacement of the bearings 56.

For this purpose, the ring 58 is made of a rigid material, such as steel. The ring 58 has an internal diameter which is greater than the internal diameter of the rolling bearings 56 and greater than the internal diameter of the guide ring 54 in its retracted state. As can be seen on Figs. 3 and 5, in normal operation, the rigid ring 58, and in particular the internal bearing surface 80, is not in contact with the drive shaft 22.

In other words, the rigid ring 58 is a limitation ring. The expression "rigid" means that the ring 58 has an elasticity which is lower than that of the compression ring 66 and the support rings 76.

Finally, the guide sleeve 46 is equipped, at its end remote from the connection portion 28 of the drive shaft 22, with a resilient seal 82 (Fig. 2) for sealing the body 42.

The operation of the transmission assembly according to the invention will now be described with reference to Fig. 2 and Figs. 5 to 9.

In normal operation, in other words when the breakable portion 30 is intact, the motor drives the running wheels 10 via the driving universal joint 14, the drive shaft 22 and its tripod 36, the connection casing 44 and the driven universal joint 16.

If there is a malfunction, for example of the drive motor 6, the torque being applied to the breakable portion 30, between the driving end portion 26 and the connection portion 28 of the drive shaft 22, reaches a predetermined peak value, and the breakable portion 30 breaks at the calibrated groove 32.

The driving end portion 26 and the connecting end portion 28 of the drive shaft 22 are then disconnected from each other. They are free in translation relative to one another along the drive axis A and rotate freely relative to one another about the drive axis A.

The driving end portion 26 remains drivingly connected to the motor 6, while the connection portion 28, the connection casing 44 and the guide sleeve 46 remain drivingly connected to the wheels 10.

It follows that the driving end portion 26 rotates at a high speed in the guide sleeve 46.

The rupture usually produces great radial stresses in the driving end portion 26 of the shaft 22.

When this radial impact occurs, the driving end portion 26 abuts radially against the rigid ring 58, as shown in Fig. 6. The rigid ring 58 thus limits the freedom of radial displacement of the shaft 22 and hence limits the stresses being applied to the ring 54 and the bearings 56. As can be seen on Fig. 6, during the rupture, the driving end portion 26 abuts against the rolling bearings 56, the guide ring 54 and the rigid ring 58. The contact areas of the driving end portion 26 with the first and second rolling bearings 56 are such that they induce a deformation of the respective resilient support rings 76 in radially opposing directions with respect to the drive axis. On Fig. 6, the contact areas of the drive shaft 22 with the first and second rolling bearings 56 are respectively on the bottom left side of the first rolling bearing 56 and on the top right side of the second rolling bearing 56.

The driving end portion 26 further contacts the guide ring 54 at two distinct contact areas. These contact areas are symmetrical with respect to a centre point of the guide ring 54. On Fig. 6, the contact areas of the drive shaft 22 with the guide ring 54 are on the bottom left side and the top right side of the guide ring 54.

Finally, the driving end portion 26 abuts against the rigid ring 58 on the same radial side with respect to the drive axis as against the second rolling bearing 56 and the connecting side portion of the guide ring 54 (top side on fig. 6).

As can be seen on Fig. 7, after the rupture, the drive shaft 22 is still in contact with the rolling bearings 56 and the guide ring 54. It is no longer in contact with the rigid ring 58. The areas of contact of the drive shaft 22 with the rolling bearings 56 and the guide ring 54 have similar locations as during the rupture. However, the deformation of the resilient support rings 76 by the drive shaft 22 is less important.

As explained hereinbefore, the great friction generated between the driving end portion 26 and the guide ring 54 then raises the temperature of the ring 54, which transmits the heat to the compression ring 66.

Under the effect of the heat, the ring 66 becomes malleable and allows the guide ring 54 to dilate under the effect of the resilient loading means 64.

The guide ring 54 therefore expands to its dilated state of large internal diameter.

Once the guide ring 54 is in its dilated state, the rolling bearings 56 have an internal diameter which is smaller than the internal diameter of the guide ring 54 and it is therefore the bearings 56 which guide the shaft 22 in rotation about and in translation along the axis A. As shown on Fig. 9, after the guide ring 54 has reached its dilated state, the driving end portion 26 is only in contact with the rolling bearings 56, which guide the drive shaft in rotation and in translation. The areas of contact are in radially opposing locations with respect to the drive axis. The resilient support rings 76 absorb the radial stresses, as shown in Fig. 9. After the guide ring 54 has reached its dilated state, the driving end portion 26 no longer contacts the guide ring 54 and the rigid ring 58.

The transmission assembly 2 according to the invention therefore has the advantage of being relatively simple to construct and of enabling railway vehicles to continue to travel at a speed of at least 330 km/h over a distance of at least 5000 km after rupture of the breakable portion 30.

The transmission assembly 2 according to the invention therefore allows the railway vehicle 4 to maintain its commercial speed, even in the event of a malfunction.

In addition, the transmission assembly 2 according to the invention is simple. It is easy to assemble, and is of a relatively low cost and weight.

During repair operations, the operator needs only to replace the guide sleeve 46 and the drive shaft 22, which facilitates repair operations.

In addition, the removable mounting of the guide sleeve 46 on the connection casing 44 allows for modular design of the connection module 24.

The distribution of the bearings 56 on either side of the ring 54 further ensures that the driving end portion 26 of the drive shaft 22 is effectively maintained under bending load.

The invention also applies to other motor vehicles, for example to lorries.

## Claims

1. Transmission assembly (2) for a motor vehicle, in particular for a railway vehicle, of the type comprising a drive shaft (22) which is rotatable about a drive axis (A) and a sliding connection module (24), the drive shaft (22) comprising:
- a driving end portion (26);
- a connecting end portion (28) which is drivingly connected to the connection module (24); and
- a breakable portion (30) which fixedly joins the driving end portion (26) and the connecting end portion (28), and is adapted to break beyond a predetermined torque between the driving end portion (26) and the connecting end portion (28),
the connection module (24) comprising a connection casing (44) which receives the connecting end portion (28) of the drive shaft (22) so that it is coupled in rotation about the drive axis (A) and slidable along the drive axis (A), the connection module (24) comprising a guide sleeve (46) comprising a guide ring (54) which guides the driving end portion (26) of the drive shaft (22) in translation along the drive axis (A) and in rotation about the drive axis (A),
**characterised in that** the guide sleeve (46) further comprises at least a rolling bearing (56) adapted to guide the driving end portion (26) of the drive shaft (22) in translation along the drive axis (A) and in rotation about the drive axis (A), and **in that** said guide ring (54) is expandable between an initial retracted state of small internal diameter and a dilated state of larger internal diameter, the internal diameter of the or each rolling bearing (56) being greater than the internal diameter of the guide ring (54) in its retracted state and smaller than the internal diameter of the guide ring (54) in its dilated state.

2. Transmission assembly (2) according to claim 1, wherein the rolling bearing (56) comprises an outer ring (68) and an inner ring (69) arranged inside the outer ring (68), the inner ring (69) and the outer ring (68) defining a bearing race therebetween.

3. Transmission assembly (2) according to either claim 1 or claim 2, wherein the rolling bearing (56) is resiliently mounted radially to the axis of the rolling bearing (56).

4. Transmission assembly (2) according to claim 3 taken together with claim 2, comprising a resilient support ring (76) which surrounds the outer ring (68) of the rolling bearing (56) so as to provide a freedom of radial displacement of the outer ring (68) in the guide sleeve (46).

5. Transmission assembly (2) according to any one of the preceding claims, wherein the rolling bearing (56) has an inner surface (74) which is adapted to guide the driving end portion (26) of the drive shaft (22), the inner surface (74) being made of a material having a low coefficient of friction, such as bronze.

6. Transmission assembly (2) according to claim 5 taken together with claim 2, wherein the rolling bearing (56) is provided with an inner ring (72) having a low coefficient of friction which defines said inner surface (74) and is arranged inside the inner ring (69) defining the bearing race.

7. Transmission assembly (2) according to any one of the preceding claims, wherein the guide sleeve (46) comprises an additional rolling bearing (56) which guides the driving end portion (26) of the drive shaft (22) in translation along the drive axis (A) and in rotation about the drive axis (A), the guide ring (54) preferably being arranged between the two rolling bearings (56).

8. Transmission assembly (2) according to claim 7, wherein the guide ring (54) and the rolling bearings (56) are spaced along the drive axis (A) with respect to one another.

9. Transmission assembly (2) according to claim 7 or 8, wherein when the guide ring (54) is in its dilated state, the rolling bearings (56) guide the drive shaft (22) in rotation about and in translation along the drive axis (A).

10. Transmission assembly (2) according to any one of the preceding claims, wherein before the rupture of the drive shaft (22), the or each rolling bearing (56) is not in contact with the drive shaft (22).

11. Transmission assembly (2) according to any one of the preceding claims, wherein the guide ring (54) comprises resilient loading means (64) intended to deform the guide ring (54) from its retracted state towards and to its dilated state.

12. Transmission assembly (2) according to claim 11, wherein the guide ring (54) is radially divided into a plurality of portions (62), the resilient loading means (64) being arranged between the portions (62) to urge the portions (62) radially apart from one another.

13. Transmission assembly (2) according to any one of the preceding claims, wherein the guide ring (54) is held in its retracted state by a compression ring (66) surrounding the guide ring (54), the compression ring (66) being plastically deformable above a threshold temperature and thus being adapted to allow the guide ring (54) to dilate to its dilated state.

14. Transmission assembly (2) according to any one of the preceding claims, wherein the guide ring (54) defines an internal bearing surface (60), the internal bearing surface (60) being made of a material having a low coefficient of friction, such as bronze.

15. Transmission assembly (2) according to any one of the preceding claims, comprising a limitation ring (58), in particular a rigid ring, defining a guide surface (80) which guides the driving end portion (26) of the drive shaft (22) in translation along the drive axis (A) and in rotation about the drive axis (A), the limitation ring (58) having an internal diameter adapted to limit the radial stresses being applied to the rolling bearing (56) in the event of a rupture of the drive shaft (22).

16. Transmission assembly (2) according to any one of the preceding claims, comprising:
- a driving universal joint (14) intended to be connected to a drive motor (6);
- a driven universal joint (16) adapted to be driven by the driving universal joint (14), intended to be drivingly connected to the running wheels (10) of the motor vehicle (2); and
- a driving sliding connection system (18) between the driving universal joint (14) and the driven universal joint (16), comprising the drive shaft (22) and the sliding connection module (24).

17. Motor vehicle (4), in particular a railway vehicle, comprising a drive motor (6) and running wheels (10), and a transmission assembly (2) drivingly connecting the drive motor (6) and the running wheels (10), **characterised in that** the transmission assembly (2) is as defined in any one of the preceding claims.

## Patentansprüche

1. Eine Getriebeeinrichtung (2) für ein Kraftfahrzeug, insbesondere für ein Schienenfahrzeug, der Bauart aufweisend eine Antriebswelle (22), welche um eine Antriebsachse (A) rotierbar ist, und ein Gleitverbindungsmodul (24), wobei die Antriebswelle (22) aufweist:
- einen Antriebsendabschnitt (26),
- einen Verbindungsendabschnitt (28), welcher mit dem Verbindungsmodul (24) trieblich verbunden ist, und
- einen brechbaren Abschnitt (30), welcher den Antriebsendabschnitt (26) und den Verbindungsendabschnitt (28) fest verbindet und dazu eingerichtet ist, beim Überschreiten eines vorbestimmten Drehmoments zwischen dem Antriebsendabschnitt (26) und dem Verbindungsendabschnitt (28) zu brechen,
wobei das Verbindungsmodul (24) aufweist ein Verbindungsgehäuse (44), welches den Verbindungsendabschnitt (28) der Antriebswelle (22) aufnimmt, sodass er rotierbar um die Antriebsachse (A) gekuppelt und entlang der Antriebsachse (A) gleitbar ist, wobei das Verbindungsmodul (24) aufweist eine Führungshülse (46), welche einen Führungsring (54) aufweist, welcher den Antriebsendabschnitt (26) der Antriebswelle (22) in Translation entlang der Antriebsachse (A) und in Rotation um die Antriebsachse (A) führt,
**dadurch gekennzeichnet, dass** die Führungshülse (46) weiter aufweist mindestens ein Wälzlager (56), welches dazu eingerichtet ist, den Antriebsendabschnitt (26) der Antriebswelle (22) in Translation entlang der Antriebsachse (A) und in Rotation um die Antriebsachse (A) zu führen, und dadurch, dass der Führungsring (54) zwischen einem anfänglichen eingezogenen Zustand mit geringem Innendurchmesser und einem ausgedehnten Zustand mit einem größeren Innendurchmesser erweiterbar ist, wobei der Innendurchmesser des oder jedes Wälzlagers (56) größer ist als der Innendurchmesser des Führungsrings (54) in dessen eingezogenem Zustand und kleiner ist als der Innendurchmesser des Führungsrings (54) in dessen ausgedehntem Zustand.

2. Getriebeeinrichtung (2) gemäß Anspruch 1, wobei das Wälzlager (56) aufweist einen Außenring (68) und einen in dem Außenring (68) angeordneten Innenring (69), wobei der Innenring (69) und der Außenring (68) zwischen sich eine Lagerlaufbahn definieren.

3. Getriebeeinrichtung (2) gemäß Anspruch 1 oder 2, wobei das Wälzlager (56) radial zu der Achse des Wälzlagers (56) nachgiebig angebracht ist.

4. Getriebeeinrichtung (2) gemäß Anspruch 3 zusammengenommen mit Anspruch 2 aufweisend einen elastischen Stützring (76), welcher den Außenring (68) des Wälzlagers (56) umgibt, sodass eine Freiheit für eine Radialverlagerung des Außenrings (68) in der Führungshülse (46) bereitgestellt ist.

5. Getriebeeinrichtung (2) gemäß irgendeinem der vorangegangenen Ansprüche, wobei das Wälzlager (56) eine innere Fläche (74) aufweist, welche zum Führen des Antriebsendabschnitts (26) der Antriebswelle (22) eingerichtet ist, wobei die innere Fläche (74) aus einem Material mit einem niedrigen Reibungskoeffizienten gemacht ist, wie beispielsweise Bronze.

6. Getriebeeinrichtung (2) gemäß Anspruch 5 zusammengenommen mit Anspruch 2, wobei das Wälzlager (56) mit einem Innenring (72) ausgestattet ist, welcher einen geringen Reibungskoeffizienten aufweist, die innere Fläche (74) definiert und in dem Innenring (69) angeordnet ist, welcher die Lagerlaufbahn definiert.

7. Getriebeeinrichtung (2) gemäß irgendeinem der vorangegangenen Ansprüche, wobei die Führungshülse (46) ein zusätzliches Wälzlager (56) aufweist, welches den Antriebsendabschnitt (26) der Antriebswelle (22) in Translation entlang der Antriebsachse (A) und in Rotation um die Antriebsachse (A) führt, wobei der Führungsring (54) vorzugsweise zwischen den beiden Wälzlagern (56) angeordnet ist.

8. Getriebeeinrichtung (2) gemäß Anspruch 7, wobei der Führungsring (54) und die Wälzlager (56) entlang der Antriebsachse (A) in Abstand voneinander sind.

9. Getriebeeinrichtung (2) gemäß Anspruch 7 oder 8, wobei die Wälzlager (56) die Antriebswelle (22) in Rotation um die Antriebsachse (A) und in Translation entlang der Antriebsachse (A) führen, wenn der Führungsring (54) in seinem ausgedehnten Zustand ist.

10. Getriebeeinrichtung (2) gemäß irgendeinem der vorangegangenen Ansprüche, wobei vor dem Bruch der Antriebswelle (22) das oder jedes Wälzlager (56) nicht in Kontakt mit der Antriebswelle (22) ist.

11. Getriebeeinrichtung (2) gemäß irgendeinem der vorangegangenen Ansprüche, wobei der Führungsring (54) elastische Belastungsmittel (64) aufweist, welche vorgesehen sind, um den Führungsring (54) von seinem eingezogenen Zustand hin zu und in den ausgedehnten Zustand zu verformen.

12. Getriebeeinrichtung (2) gemäß Anspruch 11, wobei der Führungsring (54) radial in eine Mehrzahl von Abschnitten (62) unterteilt ist, wobei die elastischen Belastungsmittel (64) zwischen den Abschnitten (62) angeordnet sind, um die Abschnitte (62) radial voneinander weg zu drängen.

13. Getriebeeinrichtung (2) gemäß irgendeinem der vorangegangenen Ansprüche, wobei der Führungsring (54) durch einen den Führungsring (54) umgebenden Kompressionsring (66) in seinem eingezogenen Zustand gehalten wird, wobei der Kompressionsring (66) über einer Schwellentemperatur plastisch verformbar und somit derart eingerichtet ist, dass sich der Führungsring (54) zu seinem ausgedehnten Zustand hin ausdehnen kann.

14. Getriebeeinrichtung (2) gemäß irgendeinem der vorangegangenen Ansprüche, wobei der Führungsring (54) eine innere Lagerfläche (60) definiert, wobei die innere Lagerfläche (60) aus einem Material mit einem niedrigen Reibungskoeffizienten gemacht ist, wie beispielsweise Bronze.

15. Getriebeeinrichtung (2) gemäß irgendeinem der vorangegangenen Ansprüche aufweisend einen Begrenzungsring (58), insbesondere einen starren Ring, welcher eine Führungsfläche (80) definiert, welche den Antriebsendabschnitt (26) der Antriebswelle (22) in Translation entlang der Antriebsachse (A) und in Rotation um die Antriebsachse (A) führt, wobei der Begrenzungsring (58) einen Innendurchmesser aufweist, welcher eingerichtet ist, um die im Falle eines Brechens der Antriebswelle (22) auf die Wälzlager (56) wirkenden radialen Spannungen zu begrenzen.

16. Getriebeeinrichtung (2) gemäß irgendeinem der vorangegangenen Ansprüche aufweisend:
- ein antreibendes Kreuzgelenk (14), welches dazu bestimmt ist, mit einem Antriebsmotor (6) verbunden zu werden,
- ein angetriebenes Kreuzgelenk (16), welches eingerichtet ist, um von dem antreibenden Kreuzgelenk (14) angetrieben zu werden, und welches dazu bestimmt ist, trieblich mit den Laufrädern (10) des Kraftfahrzeugs (4) verbunden zu werden, und
- ein antreibendes Gleitverbindungssystem (18) zwischen dem antreibenden Kreuzgelenk (14) und dem angetriebenen Kreuzgelenk (16) aufweisend die Antriebswelle (22) und das Gleitverbindungsmodul (24).

17. Kraftfahrzeug (4), insbesondere ein Schienenfahrzeug, aufweisend einen Antriebsmotor (6) und Laufräder (10) und eine Getriebeeinrichtung (2), welche den Antriebsmotor (6) trieblich mit den Laufrädern (10) verbindet, **dadurch gekennzeichnet, dass** die Getriebeeinrichtung (2) wie in irgendeinem der vorangegangenen Ansprüche definiert ist.

## Revendications

1. Assemblage de transmission (2) de véhicule automobile, notamment ferroviaire, de type comprenant un arbre d'entraînement (22) mobile en rotation autour d'un axe d'entraînement (A), et un module de liaison coulissante (24), l'arbre d'entraînement (22) comprenant :
- une partie d'extrémité d'entraînement (26) ;
- une partie d'extrémité de liaison (28) liée en entraînement au module de liaison (24) ; et
- une partie frangible (30) solidarisant la partie d'extrémité d'entraînement (26) et la partie d'extrémité de liaison (28), et apte à rompre au-delà d'un couple prédéterminé entre la partie d'extrémité d'entraînement (26) et la partie d'extrémité de liaison (28),
le module de liaison (24) comprenant un carter de liaison (44) recevant la partie d'extrémité de liaison (28) de l'arbre d'entraînement (22) de façon solidaire en rotation autour de l'axe d'entraînement (A) et de façon coulissante le long de l'axe d'entraînement (A), le module de liaison (24) comprenant un fourreau de guidage (46) comprenant une bague de guidage (54) guidant la partie d'extrémité d'entraînement (26) de l'arbre d'entraînement (22) en translation le long de l'axe d'entraînement (A) et en rotation autour de l'axe d'entraînement (A),
**caractérisé en ce que** le fourreau de guidage (46) comporte en outre au moins un palier à roulement (56) adapté pour guider la partie d'extrémité d'entraînement (26) de l'arbre d'entraînement (22) en translation le long de l'axe d'entraînement (A) et en rotation autour de l'axe d'entraînement (A), ladite bague de guidage (54) est expansible entre un état initial rétracté de petit diamètre interne et un état dilaté de plus grand diamètre interne, le diamètre interne des paliers à roulement (56) étant supérieur au diamètre interne de la bague de guidage (54) dans son état rétracté et inférieur au diamètre interne de la bague de guidage (54) dans son état dilaté.

2. Assemblage de transmission (2) selon la revendication 1, dans lequel le palier à roulement (56) comprend une bague externe (68) et une bague interne (69) agencée à l'intérieur de la bague externe (68), la bague interne (69) et la bague externe (68) délimitant entre elles un chemin de roulement.

3. Assemblage de transmission (2) selon la revendication 1 ou 2, dans lequel le palier à roulement (56) est monté de façon élastique suivant une direction radiale à l'axe du palier à roulement (56).

4. Assemblage de transmission (2) selon la revendication 3 prise ensemble avec la revendication 2, comprenant une bague élastique (76) de support entourant la bague externe (68) du palier à roulement (56) pour assurer un débattement radial de la bague externe (68) dans le fourreau de guidage (46).

5. Assemblage de transmission (2) selon l'une quelconque des revendications précédentes, dans lequel le palier à roulement (56) présente une surface interne (74) adaptée pour guider la partie d'extrémité d'entraînement (26) de l'arbre d'entraînement (22), la surface interne (74) étant réalisée dans un matériau à faible coefficient de frottement, par exemple en bronze.

6. Assemblage de transmission (2) selon la revendication 5 prise ensemble avec la revendication 2, dans lequel le palier à roulement (56) est pourvu d'une bague interne (72) à faible coefficient de frottement délimitant ladite surface interne (74) et agencée à l'intérieur de la bague interne (69) délimitant le chemin de roulement.

7. Assemblage de transmission (2) selon l'une quelconque des revendications précédentes, dans lequel le fourreau de guidage (46) comprend un palier à roulement (56) supplémentaire guidant la partie d'extrémité d'entraînement (26) de l'arbre d'entraînement (22) en translation le long de l'axe d'entraînement (A) et en rotation autour de l'axe d'entraînement (A), la bague de guidage (54) étant de préférence agencée entre les deux paliers à roulement (56).

8. Assemblage de transmission (2) selon la revendication 7, dans lequel la bague de guidage (54) et les paliers à roulement (56) sont espacés les uns des autres le long de l'axe d'entraînement (A).

9. Assemblage de transmission (2) selon la revendication 7 ou 8, dans lequel, lorsque la bague de guidage (54) est dans son état dilaté, les paliers de roulement (56) guident l'arbre d'entraînement (22) en rotation autour et en translation le long de l'axe d'entraînement (A).

10. Assemblage de transmission (2) selon l'une quelconque des revendications précédentes, dans lequel, avant la rupture de l'arbre d'entraînement (22), le ou les paliers à roulement (56) ne sont pas en contact avec l'arbre d'entraînement (22).

11. Assemblage de transmission (2) selon l'une quelconque des revendications précédentes, dans lequel la bague de guidage (54) comprend des moyens (64) de sollicitation élastique prévus pour déformer la bague de guidage (54) de son état rétracté vers et jusqu'à son état dilaté.

12. Assemblage de transmission (2) selon la revendication 11, dans lequel la bague de guidage (54) est divisée radialement en plusieurs tronçons (62), les moyens de sollicitation élastique (64) étant agencés entre les tronçons (62) pour écarter les tronçons (62) radialement les uns par rapport aux autres.

13. Assemblage de transmission (2) selon l'une quelconque des revendications précédentes, dans lequel la bague de guidage (54) est maintenue dans son état rétracté par une bague de compression (66) entourant la bague de guidage (54), la bague de compression (66) étant propre à se déformer plastiquement à partir d'une valeur seuil de température et à permettre ainsi à la bague de guidage (54) de se dilater jusqu'à son état dilaté.

14. Assemblage de transmission (2) selon l'une quelconque des revendications précédentes, dans lequel la bague de guidage (54) comprend une portée interne (60), la portée interne (60) étant réalisée dans un matériau présentant un faible coefficient de friction, tel que le bronze.

15. Assemblage de transmission (2) selon l'une quelconque des revendications précédentes, comprenant une bague de limitation (58), en particulier une bague rigide , délimitant une surface (80) de guidage de la partie d'extrémité d'entraînement (26) de l'arbre d'entraînement (22) en translation le long de l'axe d'entraînement (A) et en rotation autour de l'axe d'entraînement (A), la bague de limitation (58) ayant un diamètre interne adapté pour limiter les efforts radiaux s'exerçant sur le palier à roulement (56) en cas de rupture de l'arbre d'entraînement (22).

16. Assemblage de transmission (2) selon l'une quelconque des revendications précédentes, comprenant :
- un joint Cardan d'entraînement (14) destiné à être relié à un moteur d'entraînement (6) ;
- un joint Cardan entraîné (16) adapté pour être entraîné par le joint cardan d'entraînement (14), destiné à être relié en entraînement à des roues de roulement (10) du véhicule automobile (2) ; et
- un système de liaison coulissante (18) d'entraînement entre le joint Cardan d'entraînement (14) et le joint Cardan entraîné (16) comprenant l'arbre d'entraînement (22) et le module de liaison coulissante (24).

17. Véhicule automobile (4), notamment ferroviaire, comprenant un moteur d'entraînement (6) et des roues de roulement (10), et un assemblage de transmission (2) reliant en entraînement le moteur d'entraînement (6) et les roues de roulement (10), **caractérisé en ce que** l'assemblage de transmission (2) est selon l'une quelconque des revendications précédentes.
